# FASCICULE DE BREVET EUROPEEN

(11) **EP 0 796 715 B1**
(45) Date de publication et mention de la délivrance du brevet: **04.08.2004**
(21) Numéro de dépôt: 97400646.2
(22) Date de dépôt: 21.03.1997
(51) Int. Cl.: B29C 49/48, B29C 49/42, B60K 15/04

(54) **Procédé et dispositif de fabrication d'un faisceau de tubes accolés**
Verfahren und Vorrichtung zum Herstellen von aneinanderliegenden und verbundenen Rohren
Method and apparatus for producing a tube bundle connected to each other

(30) Priorité: 22.03.1996 FR 9603631
(43) Date de publication de la demande: 24.09.1997
(73) Titulaire: COMPAGNIE PLASTIC OMNIUM, 69007 Lyon (FR)
(72) Inventeur: Bousselin, Geoffroy, 60750 Choisy Au Bac (FR); Leviel, Claude, 60800 Crepy En Valois (FR)
(74) Mandataire: Leszczynski, André

(56) Documents cités:
- EP-A- 0 360 220
- EP-A- 0 636 505
- FR-A- 1 478 772
- FR-A- 2 148 424
- US-A- 4 865 777
- PATENT ABSTRACTS OF JAPAN vol. 008, no. 284 (M-348), 26 Décembre 1984 & JP 59 152822 A (KIYOORAKU KK), 31 Août 1984,
- PATENT ABSTRACTS OF JAPAN vol. 012, no. 416 (M-759), 4 Novembre 1988 & JP 63 153114 A (USHIGORO SUMITOMO), 25 Juin 1988,
- PATENT ABSTRACTS OF JAPAN vol. 011, no. 157 (M-590), 21 Mai 1987 & JP 61 287709 A (USHIGORO SUMITOMO), 18 Décembre 1986,

## Description

La présente invention concerne la fabrication de corps creux en matière plastique par extrusion-soufflage, en procèdant à l'extrusion d'une paraison dans une cavité de moule puis en soufflant un gaz dans cette paraison pour la conformer aux parois de ladite cavité.

Pour réaliser un tube courbe par extrusion-soufflage, il est connu de créer, simultanément à l'extrusion, un courant d'air pour entraîner la paraison dans la cavité de moule.

Toutefois, ce procédé connu est inapplicable à la fabrication d'un faisceau formé d'au moins deux tubes courbes et accolés car la paraison doit être pincée dans la cavité de moule selon au moins une ligne parallèle aux génératrices du faisceau pour obtenir lors du soufflage l'étanchéité entre les tubes, et un tel pincement s'oppose au déplacement de la paraison dans la cavité de moule sous l'effet du courant d'air d'entraînement.

Il est connu, par l'abrégé japonais JP-A-59152822, de fabriquer un ensemble de deux tubes droits reliés entre eux en soufflant un gaz dans une paraison pour la conformer à la paroi d'une cavité de moule. Un pincement de la matière intervient après le soufflage pour former les deux tubes.

La demande de brevet européen EP-A-0 360 220 décrit un procédé de fabrication d'un ensemble de tuyaux par soufflage, sans pincement de la matière.

La présente invention a pour objet un nouveau procédé permettant de réaliser par extrusion-soufflage un faisceau de tubes courbes et accolés.

Le procédé selon l'invention se caractérise par le fait que l'on extrude sans pincement la paraison dans une cavité de moule à géométrie modifiable, la mise en place de la paraison dans ladite cavité s'effectuant sous l'action d'un courant d'air d'entraînement, puis on modifie la géométrie de la cavité de moule pour pincer la paraison et l'on injecte un gaz pour conformer cette dernière à la géométrie de la cavité de moule ainsi modifiée et obtenir au moins deux tubes courbes et accolés.

L'invention a encore pour objet un dispositif permettant de réaliser un faisceau de tubes courbes et accolés par extrusion-soufflage.

Le dispositif selon l'invention est décrit dans la revendication 2.

Avantageusement, ladite partie mobile s'étend longitudinalement sensiblement sur toute la longueur de la cavité de moule.

On utilise au moins deux parties mobiles en regard l'une de l'autre, de préférence aptes à pincer la paraison lorsque rapprochées.

D'autres caractéristiques et avantages de la présente invention ressortiront à la lecture de la description détaillée qui suit et à l'examen du dessin annexé sur lequel :
- la figure 1 est une vue schématique d'un dispositif d'extrusion-soufflage conforme à un exemple de réalisation de l'invention,
- la figure 2 est une vue schématique en coupe transversale selon II-II de la figure 1,
- la figure 3 est une vue analogue à la figure 1, à la fin de l'extrusion de la paraison,
- la figure 4 est une vue analogue à la figure 1, lors du soufflage de la paraison,
- la figure 5 est une vue selon V-V de la figure 4,
- la figure 6 est une vue analogue à la figure 1, lors de l'extraction du faisceau de tubes accolés,
- la figure 7 est une section transversale d'un faisceau de tubes accolés réalisé conformément à l'invention, et
- la figure 8 est une section transversale d'un faisceau de tubes accolés réalisé conformément à l'invention.

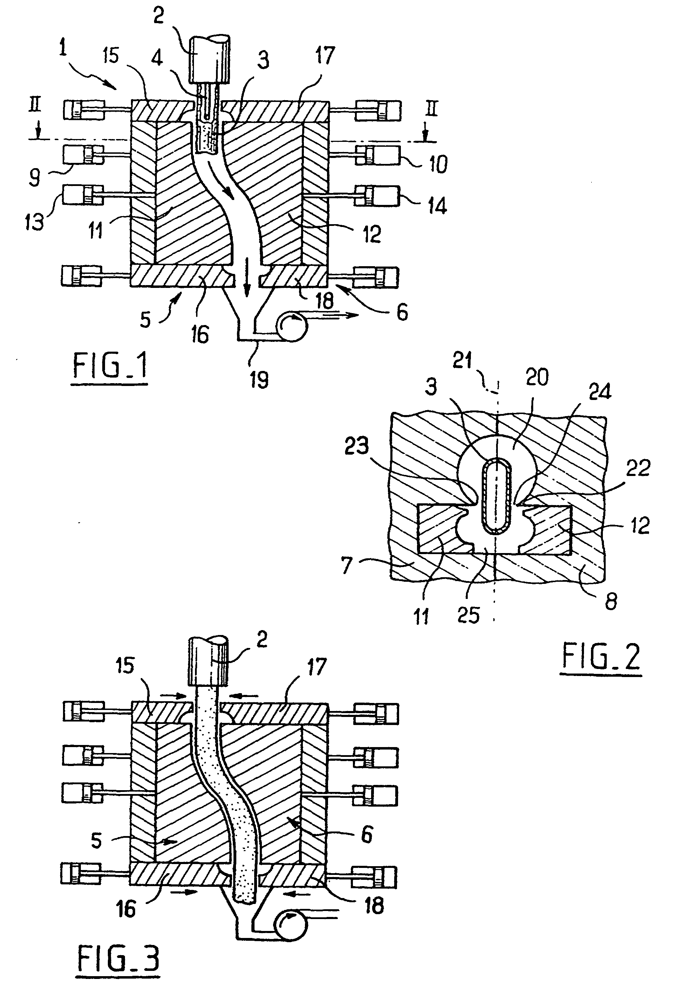

On a représenté sur la figure 1 un dispositif 1 pour réaliser par extrusion-soufflage un faisceau de tubes courbes et accolés.

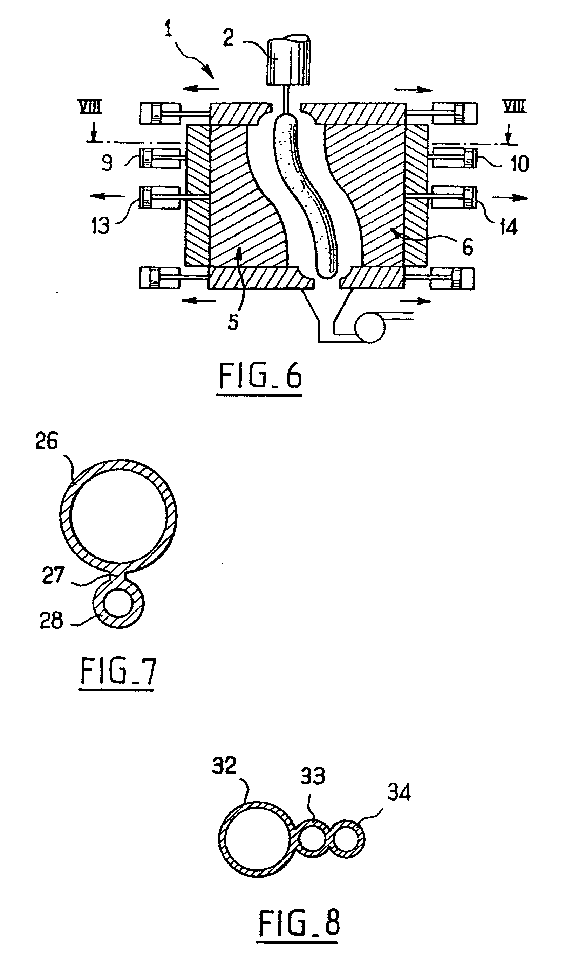

Dans l'exemple particulier de réalisation décrit, le dispositif 1 permet la fabrication d'une canalisation de remplissage de réservoir de carburant, comprenant deux tubes accolés de différents diamètres, tel que représenté en section transversale sur la figure 7.

On distingue sur cette figure un tube 26 de grand diamètre, destiné à relier la goulotte de remplissage et le réservoir et un tube 28 de petit diamètre, destiné à servir de conduite de mise à l'air libre du réservoir, relié au tube 26 par un voile de matière 27.

En se reportant à nouveau à la figure 1, le dispositif 1 comporte une tête d'extrusion 2 permettant d'extruder par une ouverture annulaire une paraison 3 de section transversale sensiblement ovale.

La tête d'extrusion 2 est prolongée inférieurement par deux aiguilles de soufflage 4 situées à l'intérieur de l'ouverture annulaire servant à l'extrusion de la matière plastique et qui se superposent sur les figures.

Le dispositif 1 comporte en outre deux sous-ensembles 5 et 6 définissant entre eux une cavité de moule s'étendant selon un trajet sinueux, pour la réalisation d'un faisceau de tubes courbes et accolés.

Les sous-ensembles 5, 6 comportent des parties principales respectives 7, 8 pouvant s'écarter l'une de l'autre sous l'action de vérins respectifs 9, 10 et des parties mobiles respectives 11, 12 déplaçables en rapprochement l'une de l'autre sous l'action de vérins respectifs 13, 14.

Des obturateurs inférieur et supérieur constitués par des paires de plaques 15, 17, respectivement 16, 18, permettent de fermer la cavité de moule à ses extrémités pour le soufflage de la paraison 3.

Les plaques de chaque obturateur sont déplaçables en rapprochement l'une de l'autre pour fermer l'extrémité correspondante de la cavité de moule au moyen de vérins respectifs représentés schématiquement.

Pour faciliter le déplacement de la paraison 3 au cours de l'extrusion jusqu'à l'obturateur inférieur constitué par les plaques 16, 18, on souffle un gaz, de préférence de l'air, par les aiguilles 4, de manière à créer un courant d'air tendant à entraîner la paraison 3 selon le trajet sinueux de la cavité de moule formée entre les sous-ensembles 5 et 6.

Le gaz soufflé par les aiguilles 4 est recueilli en aval de l'obturateur inférieur par un dispositif d'aspiration 19, qui crée une dépression à la sortie de la cavité du moule.

Les parties principales 7, 8 des sous-ensembles 5,6 sont en contact selon un plan de joint 21 et définissent entre elles une cavité 20 de section transversale sensiblement circulaire, pour la formation du tube 26, débouchant au travers d'une ouverture 24 ménagée entre des bords 22, 23 de la cavité 20, dans un logement 25 dans lequel les parties mobiles 11 et 12 peuvent se déplacer.

Ces dernières présentent sur leurs faces en regard deux gorges de section transversale en arc de cercle pour former, après rapprochement, une cavité de section transversale circulaire pour la formation du tube 28.

L'écartement entre les bords 22 et 23 est suffisant pour éviter de gêner le déplacement de la paraison 3 dans la cavité de moule et les parties mobiles 11 et 12 se situent lors de l'extrusion en retrait des bords 22, 23, dans la position escamotée représentée sur la figure 2. Ainsi, la paraison 3 n'est pas pincée par les parties principales 7, 8 ni par les parties mobiles 11, 12 et peut descendre dans la cavité de moule sous l'action du courant d'air créé entre les extrémités supérieure et inférieure de la cavité de moule.

A la fin de l'extrusion, c'est-à-dire lorsque l'extrémité inférieure de la paraison 3 a franchi les plaques 16, 18 de l'obturateur inférieur, comme représenté sur la figure 3, le processus d'extrusion est arrêté et les plaques 15, 17 ainsi que les plaques 16, 18 sont rapprochées pour fermer la cavité de moule à ses extrémités supérieure et inférieure.

Les plaques 15, 17 de l'obturateur supérieur ménagent, lorsqu'elles sont rapprochées, deux orifices pour le passage des aiguilles de soufflage 4.

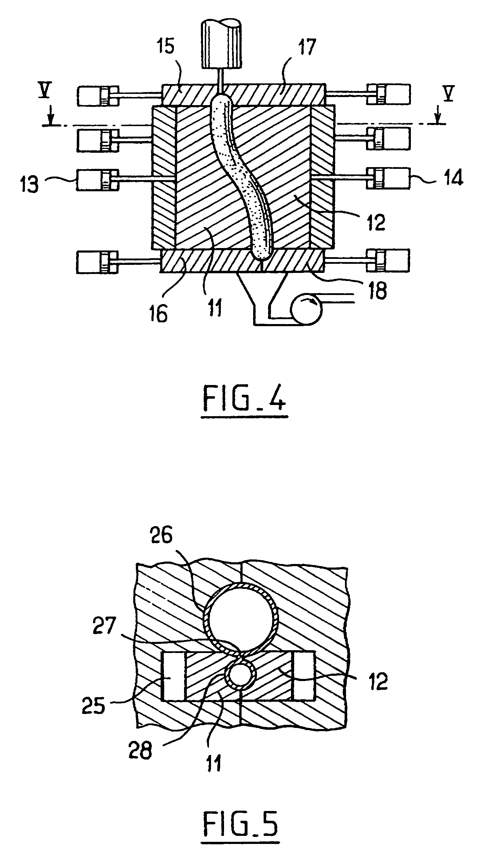

Simultanément à la fermeture des obturateurs constitués par les plaques 15, 17 et 16, 18, ou postérieurement à cette fermeture, les parties mobiles 11, 12 sont rapprochées par actionnement des vérins 13, 14, comme illustré sur les figures 4 et 5, pour pincer la paraison 3 et former le pont de matière 27 reliant les tubes 26 et 28.

Les parties mobiles présentent des surfaces venant dans le prolongement des bords 22 et 23 pour compléter la section circulaire de la cavité 20.

Les aiguilles de soufflage 4 débouchent respectivement à l'intérieur des portions tubulaires de la paraison qui donneront les tubes 26 et 28 après soufflage.

Un gaz sous pression est ainsi soufflé par l'une des aiguilles 4 à l'intérieur de la portion tubulaire de paraison contenue dans la cavité 20 et ce gaz plaque la matière contre la surface interne de cette cavité pour former le tube 26. L'autre aiguille 4 souffle un gaz sous pression à l'intérieur de la portion tubulaire de paraison contenue dans la cavité ménagée entre les parties mobiles 11 et 12 pour plaquer la matière contre la surface de cette cavité et former le tube 28.

Après soufflage et refroidissement, les sous-ensembles 5, 6 sont écartés par actionnement des vérins 13, 14 et 9, 10 et les obturateurs inférieur et supérieur sont ouverts.

La pièce qui vient d'être fabriquée est éjectée du moule et l'on obtient, après sectionnement des extrémités, un faisceau de tubes courbes et accolés tel que représenté en section transversale sur la figure 7.

Le dispositif 1 est alors prêt pour la fabrication d'un nouveau faisceau de tubes.

Le dispositif 1 comporte avantageusement des moyens de refroidissement des sous-ensembles 5, 6 après soufflage de la paraison 3 et avant l'éjection de la pièce moulée.

Ces moyens de refroidissement peuvent être de tout type connu en soi et n'ont pas été représentés dans un souci de clarté du dessin.

L'injection de l'air de soufflage peut être effectuée, dans une variante non représentée, au moyen d'aiguilles disposées à l'intérieur des sous-ensembles 5, 6.

La mise en place de la paraison dans la cavité de moule au moyen d'un courant d'air permet avantageusement d'éviter un contact prématuré de la paraison avec la cavité de moule et permet de produire des pièces moulées présentant un aspect de surface lisse.

Le procédé selon l'invention permet d'utiliser des matières plastiques ayant une cohésion mécanique relativement faible à l'état fondu, telles que des polyamides par exemple.

On peut sans sortir du cadre de l'invention former la paraison par extrusion simultanée de plusieurs couches de matériaux différents.

Bien entendu, l'invention n'est pas limitée à l'exemple de réalisation qui vient d'être décrit.

On peut notamment généraliser l'invention à la fabrication d'un faisceau de tubes courbes comportant plus de deux tubes accolés, par exemple trois tubes accolés 32, 33, 34 comme représenté en section transversale sur la figure 9.

On peut encore réaliser un faisceau de tubes dans lequel les tubes présentent des sections diverses, non circulaires, et variables selon la position longitudinale sur le faisceau.

## Revendications

1. Procédé de fabrication d'un faisceau formé d'au moins deux tubes courbes et accolés, **caractérisé par le fait qu'**il comprend les étapes consistant à :
- extruder sans pincement une paraison (13) dans une cavité de moule à géométrie modifiable, la mise en place de la paraison dans ladite cavité s'effectuant sous l'action d'un courant d'air d'entraînement,
- modifier la géométrie de la cavité de moule pour pincer la paraison,
- injecter un gaz pour conformer la paraison à la géométrie de la cavité de moule ainsi modifiée et obtenir au moins deux tubes courbes et accolés (26, 28).

2. Dispositif pour la fabrication d'un faisceau formé d'au moins deux tubes courbes et accolés (26, 28) selon le procédé de la revendication 1 comportant une cavité de moule et au moins deux parties mobiles (11 ; 12) en regard l'une de l'autre, permettant de modifier la géométrie de ladite cavité de moule, **caractérisé par le fait que** lesdites parties mobiles sont déplaçables entre une position escamotée permettant la mise en place d'une paraison dans la cavité de moule sous l'effet d'un courant d'air et une position de pincement de la paraison pour permettre la formation d'au moins deux tubes courbes et accolés, lesdites parties mobiles présentent sur leurs faces en regard deux gorges de section transversale en arc de cercle pour former, après rapprochement, une cavité de section transversale circulaire pour la formation d'un tube.

3. Dispositif selon la revendication 2, **caractérisé par le fait que** la cavité de moule s'étend selon un trajet sinueux.

4. Dispositif selon la revendication 2 ou 3, **caractérisé par le fait que** la partie mobile (11 ; 12) s'étend longitudinalement sensiblement sur toute la longueur de la cavité du moule.

5. Dispositif selon l'une quelconque des revendications 2 à 4, **caractérisé par le fait que** les deux parties mobiles (11 ; 12) en regard l'une de l'autre sont aptes à pincer la paraison (3) lorsque rapprochées.

6. Dispositif selon l'une quelconque des revendications 2 à 5, **caractérisé par le fait qu'**il comporte des aiguilles (4) aptes à créer ledit courant d'air d'entraînement.

7. Dispositif selon l'une quelconque des revendications 2 à 6, **caractérisé par le fait que** lesdites aiguilles (4) sont aptes à déboucher chacune à l'intérieur d'une portion tubulaire de la paraison qui donnera l'un des tubes après soufflage.

8. Dispositif selon l'une quelconque des revendications 2 à 7, **caractérisé par le fait qu'**il comporte des obturateurs inférieur (15 ; 17) et supérieur (16 ; 18) aptes à clore la cavité de moule à ses extrémités supérieure et inférieure.

9. Dispositif selon les revendications 7 et 8, **caractérisé par le fait que** l'obturateur supérieur comporte deux plaques (15 ; 17) aptes à ménager, lorsque rapprochées, deux orifices pour le passage desdites aiguilles (4).

10. Dispositif selon l'une quelconque des revendications 2 à 9, **caractérisé par le fait qu'**il comporte des parties principales (7 ; 8), aptes à venir en contact selon un plan de joint et aptes à définir entre elles une cavité (20) de section transversale sensiblement circulaire, cette cavité (20) débouchant au travers d'une ouverture (24) ménagée entre des bords (22 ; 23) de la cavité (20) dans un logement (25) dans lequel les parties mobiles (11 ; 12) peuvent se déplacer.

## Patentansprüche

1. Verfahren zur Herstellung eines Bündels, das von wenigstens zwei gekrümmten und aneinanderliegenden, verbundenen Rohren gebildet ist, **dadurch gekennzeichnet, dass** es die folgenden Schritte umfasst, die darauf beruhen:
- einen Vorformling (3) ohne Einklemmen in einen Formhohlraum mit veränderbarer Geometrie zu extrudieren, wobei das Einbringen des Vorformlings in den Hohlraum unter der Wirkung eines Mitnahmeluftstroms erfolgt,
- die Geometrie des Formhohlraums zu verändern, um den Vorformling einzuklemmen,
- ein Gas einzuspritzen, um den Vorformling an die so veränderte Geometrie des Formhohlraums anzupassen und um wenigstens zwei gekrümmte und aneinanderliegende, verbundene Rohre (26, 28) zu erhalten.

2. Vorrichtung für die Herstellung nach dem Verfahren des Anspruchs 1 eines von wenigstens zwei gekrümmten und aneinanderliegenden, verbundenen Rohren (26, 28) gebildeten Bündels, mit einem Formhohlraum und wenigstens zwei einander gegenüberliegenden beweglichen Teilen (11; 12), die ermöglichen, die Geometrie des Formhohlraums zu verändern, **dadurch gekennzeichnet, dass** die beweglichen Teile zwischen einer eingefahrenen Position, die das Einbringen eines Vorformlings in dem Formhohlraum unter der Wirkung eines Luftstroms ermöglicht, und einer Position zum Einklemmen des Vorformlings, um die Ausbildung von wenigstens zwei gekrümmten und aneinanderliegenden, verbundenen Rohren zu ermöglichen, verschiebbar sind, wobei die beweglichen Teile an ihren gegenüberliegenden Seiten zwei Vertiefungen mit kreisbogenförmigem Querschnitt aufweisen, um nach Annäherung einen Hohlraum mit kreisförmigem Querschnitt für die Ausbildung eines Rohrs zu bilden.

3. Vorrichtung nach Anspruch 2, **dadurch gekennzeichnet, dass** sich der Formhohlraum entlang eines kurvigen Weges erstreckt.

4. Vorrichtung nach Anspruch 2 oder 3, **dadurch gekennzeichnet, dass** sich das bewegliche Teil (11; 12) der Länge nach im Wesentlichen über die gesamte Länge des Formhohlraums erstreckt.

5. Vorrichtung nach irgendeinem der Ansprüche 2 bis 4, **dadurch gekennzeichnet, dass** die zwei einander gegenüberliegenden, beweglichen Teile (11; 12) geeignet sind, den Vorformling (3) einzuklemmen, wenn sie einander genähert werden.

6. Vorrichtung nach irgendeinem der Ansprüche 2 bis 5, **dadurch gekennzeichnet, dass** sie Nadeln (4) aufweist, die geeignet sind, den Mitnahmeluftstrom zu erzeugen.

7. Vorrichtung nach irgendeinem der Ansprüche 2 bis 6, **dadurch gekennzeichnet, dass** die Nadeln (4) geeignet sind, jeweils in einen rohrförmigen Teil des Vorformlings zu münden, der nach dem Blasen eines der Rohre ergibt.

8. Vorrichtung nach irgendeinem der Ansprüche 2 bis 7, **dadurch gekennzeichnet, dass** sie eine untere Verschlussvorrichtung (15; 17) und eine obere Verschlussvorrichtung (16; 18) aufweist, die geeignet sind, den Formhohlraum an seinem oberen und seinem unteren Ende zu verschließen.

9. Vorrichtung nach den Ansprüchen 7 und 8, **dadurch gekennzeichnet, dass** die obere Verschlussvorrichtung zwei Platten (15; 17) enthält, die geeignet sind, - wenn sie einander genähert werden - zwei Öffnungen für den Durchgang der Nadeln (4) auszusparen.

10. Vorrichtung nach irgendeinem der Ansprüche 2 bis 9, **dadurch gekennzeichnet, dass** sie Hauptteile (7; 8) enthält, die geeignet sind, entlang einer Teilungsebene in Kontakt zu kommen und die geeignet sind, zwischen sich einen Hohlraum (20) mit im Wesentlichen kreisförmigem Querschnitt zu definieren, wobei dieser Hohlraum (20) durch eine Öffnung (24), die zwischen Rändern (22; 23) des Hohlraumes (20) ausgespart ist, in eine Aufnahme (25) mündet, in der sich die beweglichen Teile (11; 12) bewegen können.

## Claims

1. Process for manufacturing a bundle formed of at least two, curved, joined tubes, **characterized by** comprising steps consisting of:
extruding, without clamping, a blank (13) in a modifiable-geometry mold cavity and placing the blank in this cavity by means of an entraining air stream,
modifying the geometry of the mold cavity to clamp the blank,
injecting a gas to shape the blank to the mold cavity geometry thus modified and to obtain at least two curved, joined tubes (26, 28).

2. Device for manufacturing a bundle formed of at least two curved, joined tubes (26,28) according to the method of claim 1, comprising a mold cavity and at least two moving parts (11; 12) one opposite the other for modifying the geometry of said mold cavity, **characterized in that** said moving parts are displaceable between a retracted position in which a blank can be placed in the mold cavity under the action of an air stream and a blank clamping position to allow formation of at least two curved, joined tubes, said moving parts having in their faces which are opposite one another grooves having an arcuate cross section to form, after they have come together, a cavity with a circular cross section to form one tube.

3. Device according to Claim 2, **characterized in that** the mold cavity extends in a curving path.

4. Device according to Claim 2 or 3, **characterized in that** moving part (11, 12) extends lengthwise over essentially the entire length of the mold cavity

5. Device according to any one of Claims 2 to 4, **characterized in that** the two moving parts (11, 12) opposite each other are able to clamp blank (3) when they are brought together.

6. Device according to any one of claims 2 to 5, **characterized in that** it comprises needles (4) that can create said entraining air stream.

7. Device according to any of claims 2 to 6, **characterized in that** each of said needles (4) is adapted to terminate in a tubular portion of the blank which will create one the tubes after blowing.

8. Device according to any one of claims 2 to 7, **characterized in that** it comprises lower (15; 17) and upper (16; 18) closures that can shut off the mold cavity at its upper and lower ends.

9. Device according to claims 7 and 8, **characterized in that** the upper closure comprises two plates (15; 17) that can provide, when close together, two orifices for passage of said needles (4).

10. Device according to any one of claims 2 to 9, **characterized in that** it comprises principal parts (7; 8) that can come in contact along a sealing plane and can define between them a cavity (20) of substantially circular section, said cavity (20) terminating at an opening (24) provided between edges (22, 23) of cavity (20) in a recess (25) in which movable parts (11; 12) can move.
